# EUROPÄISCHE PATENTSCHRIFT

(11) **EP 0 275 026 B1**
(45) Veröffentlichungstag und Bekanntmachung des Hinweises auf die Patenterteilung: **13.10.1993**
(21) Anmeldenummer: 88100105.1
(22) Anmeldetag: 07.01.1988
(51) Int. Cl.: H04N 5/782

(54) **Videorecorder mit Schrägspur-Aufzeichnung**
Video recorder providing for slant track recording
Enregistreur vidéo à enregistrement sur pistes inclinées

(30) Priorität: 16.01.1987 DE 3701101
(43) Veröffentlichungstag der Anmeldung: 20.07.1988
(73) Patentinhaber: Deutsche Thomson-Brandt GmbH, 78003 Villingen-Schwenningen (DE)
(72) Erfinder: Schütze, Herbert, Ing. grad, D-3007 Gehrden (DE); Haupt, Dieter, Dipl.-Ing., D-3000 Hannover 91 (DE); Keesen, Heinz-Werner, Dr.-Ing., D-3000 Hannover 1 (DE); Plantholt, Martin, Dr.-Ing., D-3005 Hemmingen 1 (DE); Platte, Hans-Joachim, Dr.-Ing., D-3005 Hemmingen 4 (DE); Wippermann, Horst, Dipl.-Ing., D-3017 Pattensen (DE)

(56) Entgegenhaltungen:
- EP-A- 0 153 820
- GB-A- 2 160 059
- S.M.P.T.E. JOURNAL, Band 92, Nr. 5, Mai 1983, Seiten 562-567, Scarsdale, New York, US; H. YOSHIDA et al.: "Digital video recording based on the proposed format from Sony"

## Beschreibung

Bei Videorecordern nach dem VHS-System ist es bekannt, das analoge Bildsignal entlang Schrägspuren aufzuzeichnen, wobei jeweils auf einer Schrägspur ein Halbbild aufgezeichnet ist. Bei einer derartigen Aufzeichnung ist eine Abtastung mit erhöhter Längsgeschwindigkeit des Magnetbandes zur Erzielung eines Zeitrafferbetriebes relativ einfach, weil jeweils aufeinanderfolgende Halbbilder auf dem Magnetband nebeneinander liegen und somit ohne nennenswerte Störungen bei der Abtastung Bilder übersprungen werden können.

Für die Aufzeichnung von digitalen Bildsignalen auf Magnetband mit kleinen Abmessungen, z.B. 8 mm Bandbreite, ist es bekannt, das Signal eines Bildes in mehreren aufeinanderfolgenden Spuren, z.B. 11 Spuren, aufzuzeichnen. Jede Spur, die z.B. zur Bandkante einen Winkel von 20° bildet, enthält dann ein Segment des Bildes, d.h. ein Zeilenpaket von z.B. 60 Zeilen. Bei Abtastung mit erhöhter Längsgeschwindigkeit des Bandes und entsprechendem Nachführen der Köpfe, z.B. Kippung der Rotationsachse der Trommel oder ein Aktuator, bleiben die Rotationsgeschwindigkeit des die Schrägspuren schreibenden Kopfrades, die Dauer der Abtastung einer Spur, d.h. eines Segmentes, und die Dauer eines abgetasteten Bildes konstant. Da andererseits eine bestimmte Zahl von Spuren in einer kürzeren Zeit abgetastet werden muß, müssen zwangsläufig Spuren bei der Abtastung entfallen. Da eine Spur nicht ein Halbbild, sondern nur ein Segment eines Bildes enthält, werden dadurch bestimmte Segmente eines Bildes unterdrückt. Es ist daher nicht mehr ohne weiteres möglich, alle Segmente desselben Bildes abzutasten. Dadurch ergibt sich in Abhängigkeit von dem Faktor der Erhöhung der Längsgeschwindigkeit und von dem Bildinhalt eine Diskontinuität bei der Wiedergabe. Um alle Segmente desselben Bildes abzutasten, müßte die Abtastung zwischen bestimmten Bereichen des Bandes hin und her springen. Das ist aber praktisch nicht möglich.

Der Erfindung liegt die Aufgabe zugrunde, bei einem Videorecorder der zuletzt beschriebenen Art bei erhöhter Längsgeschwindigkeit des Magnetbandes die Wiedergabe der entsprechend dem Faktor der Erhöhung der Längsgeschwindigkeit ausgewählten Bilder mit allen ihren ursprünglichen Segmenten zu ermöglichen.

Diese Aufgabe wird durch die im Anspruch 1 beschriebene Erfindung gelöst. Vorteilhafte Weiterbildungen der Erfindung sind in den Unteransprüchen beschrieben.

Es ist auch bekannt (GB-A-2 160 059), einen digitalen Videorecorder mit vier paarweise um 180° versetzten Köpfen zu versehen und damit auf einem Magnetband Datensegmente aufzuzeichnen. Die Datensegmente werden mit einem Demultiplexer derart gelesen, daß eine kontinuierliche Wiedergabe der Daten ermöglicht wird.

Es ist ferner bekannt(EP-A-0 153 820), ein digitales Fernsehsignal in verschiedene Segmente zu unterteilen und dieses Signal nach einer Aufzeichnung in einem Recorder wieder zu einem einheitlichen kontinuierlichen Signal zusammenzusetzen.

Abtastung zwischen bestimmten Bereichen des Bandes hin und her springen. Das ist aber praktisch nicht möglich.

Der Erfindung liegt die Aufgabe zugrunde, bei einem Videorecorder der zuletzt beschriebenen Art bei erhöhter Längsgeschwindigkeit des Magnetbandes die Wiedergabe der entsprechend dem Faktor der Erhöhung der Längsgeschwindigkeit ausgewählten Bilder mit allen ihren ursprünglichen Segmenten zu ermöglichen.

Diese Aufgabe wird durch die im Anspruch 1 beschriebene Erfindung gelöst. Vorteilhafte Weiterbildungen der Erfindung sind in den Unteransprüchen beschrieben.

Bei der erfindungsgemäßen Lösung wird erreicht, daß bei erhöhter Längsgeschwindigkeit des Magnetbandes, also Zeitrafferbetrieb, die ausgewählten Bilder mit allen ihren Segmenten abgetastet werden können. Es fallen zwar unvermeidbar je nach dem Faktor der Geschwindigkeitserhöhung bei der Abtastung ganze Bilder weg. Es wird jedoch erreicht, daß z.B. bei einem Faktor n = 3 das Bild Nr. 1 mit allen seinen Segmenten, dann das Bild Nr. 4 mit allen seinen Segmenten usw. abgetastet werden kann. Vorzugsweise werden in einer Gruppe von Spuren zunächst alle ersten Segmente von m Bildern aufgezeichnet, wobei m gleich dem Maximalwert von n ist. In einer nächsten Gruppe von Spuren werden dann entsprechend die zweiten Segmente der m Bilder, in einer dritten Gruppe die dritten Segmente der m Bilder usw. aufgezeichnet. Die abgewandelte Reihenfolge der Signale der einzelnen Segmente bei der Aufnahme und die entsprechende inverse Rück-Umordnung der abgetasteten Bilder bei der Wiedergabe werden durch Speicher bewirkt. Bei der Aufnahme werden die Signale der Segmente in der ursprünglichen Reihenfolge eingelesen und in der modifizierten Reihenfolge ausgelesen. Bei der Wiedergabe werden die abgetasteten Bilder in der modifizierten Reihenfolge in die Speicher eingelesen und mit der ursprünglichen, für die richtige Bildwiedergabe erforderlichen Reihenfolge ausgelesen.

Die Erfindung wird im folgenden an Hand der Zeichnung erläutert. Darin zeigen
- Fig. 1: die Anordnung der Spuren auf dem Magnetband,
- Fig. 2: die Anordnung der Bilder und Segmente bei einer bekannten Aufzeichnung,
- Fig. 3: die bei erhöhter Längsgeschwindigkeit auftretende Schwierigkeit,
- Fig. 4: im Prinzip die erfindungsgemäße Aufzeichnung,
- Fig. 5: Tabellen zur Erläuterung der Fig. 4,
- Fig. 6: die Speicherung bei der Wiedergabe,
- Fig. 7: die Speicherung bei der Wiedergabe bei Normalbetrieb und
- Fig. 8: die Speicherung bei der Aufnahme.

In der Beschreibung werden folgende Symbole verwendet:
- n =: Faktor der Erhöhung der Längsgeschwindigkeit
- V =: Bruchteil der Zahl der bei der Wiedergabe abtastbaren Bilder
- z =: Zahl der Spuren bzw. Segmente pro Bild
- m =: Zahl der innerhalb einer Gruppe aufgezeichneten Spuren mit Segmenten gleicher Ordnungszahl aufeinanderfolgender Bilder.

Bei dem beschriebenen Beispiel gelten dafür folgende Werte:
- n =: 1, 2, 3, 4, 5, 6, 8, 12, 24
- z =: 11
- m =: 24 (Maximalwert von n)

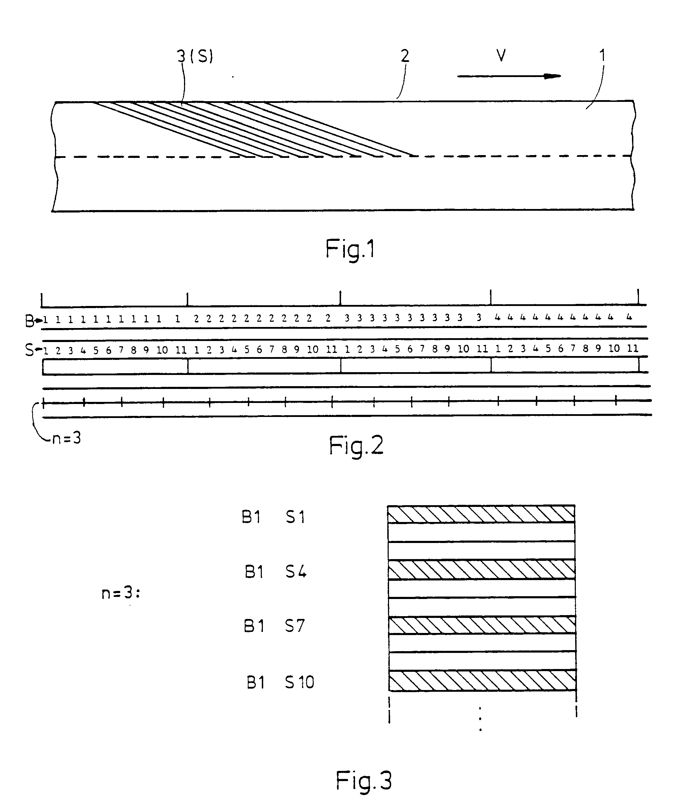

In Fig. 1 sind auf dem Magnetband 1 unter einem Winkel von 20° schräg zur Bandkante 2 verlaufende Spuren 3 aufgezeichnet. Die Spuren erstrecken sich über die Hälfte von 4 mm der Breite des Bandes, das insgesamt eine Breite von 8 mm aufweist. Entlang den Schrägspuren 3 sind mit einem rotierenen Kopfrad bei konstanter Längsgeschwindigkeit V des Magnetbandes 1 Bilder aufgezeichnet, wobei jeweils ein Bild z = 11 aufeinanderfolgende Schrägsfuren 3 einnimmt. 11 aufeinanderfolgende Schrägsfuren 3 enthalten je ein Segement S eines Bildes, z.B. ein Zeilenpaket von 60 Zeilen.

Fig. 2 zeigt diese Art der Aufzeichnung. Während der ersten 11 Spuren werden die Segmente S1 bis S11 des Bildes B1 aufgezeichnet, dann die Segmente S1 bis S11 des Bildes B2 usw.. Bei Normalbetrieb, also Wiedergabe mit Normalgeschwindigkeit Vo, werden also die aufeinanderfolgenden Segmente S1 bis S11 der aufeinanderfolgenden Bilder B in richtiger Reihenfolge wiedergegeben.

Wenn jetzt die Abtastung mit dreifacher Geschwindigkeit V, also V = 3 x Vo und n = 3 erfolgt, kann wegen der konstant bleibenden Dauer der Abtastung einer Spur und eines Bildes nur noch jede dritte Spur 3 und damit jedes dritte Segment S abgetastet werden. Die untere Zeile in Fig. 2 zeigt durch die Striche, daß bei n = 3 nur noch die Segmente B1S1, B1S4, B1S7, B1S10 usw. abgetastet werden können. Die dazwischen liegenden Segmente B1S2, B1S3, B1S5, B1S6 usw. gehen also bei der Abtastung verloren. Das Bild 1 kann also nicht mehr mit seinen ursprünglichen 11 Segmenten B1S1 bis B1S11 geschrieben werden. Insgesamt ergibt sich folgende Abtastung:

| | |
|---|---|
| Bild 1 | Segment 1,4,7,10 |
| Bild 2 | Segment 2,5,8,11 |
| Bild 3 | Segment 3,6,9. |

Bei einem Wert V von 12 x Vo, also n = 12, stammen die 11 Segmente aus 12 zeitlich aufeinanderfolgenden Bildern, so daß die Bildqualität mit zunehmender Vorschubgeschwindigkeit V schlechter wird.

Fig. 3 zeigt, daß in der beschriebenen Weise für n = 3 nur die Segmente B1S1, B1S4, B1S7, B1S10 abgetastet werden können und die dazwischen liegenden Segmente verlorengehen. Das Bild B1 kann also nicht mehr mit allen seinen ursprünglichen Segmenten S1 bis S11 für die Wiedergabe verfügbar gemacht werden.

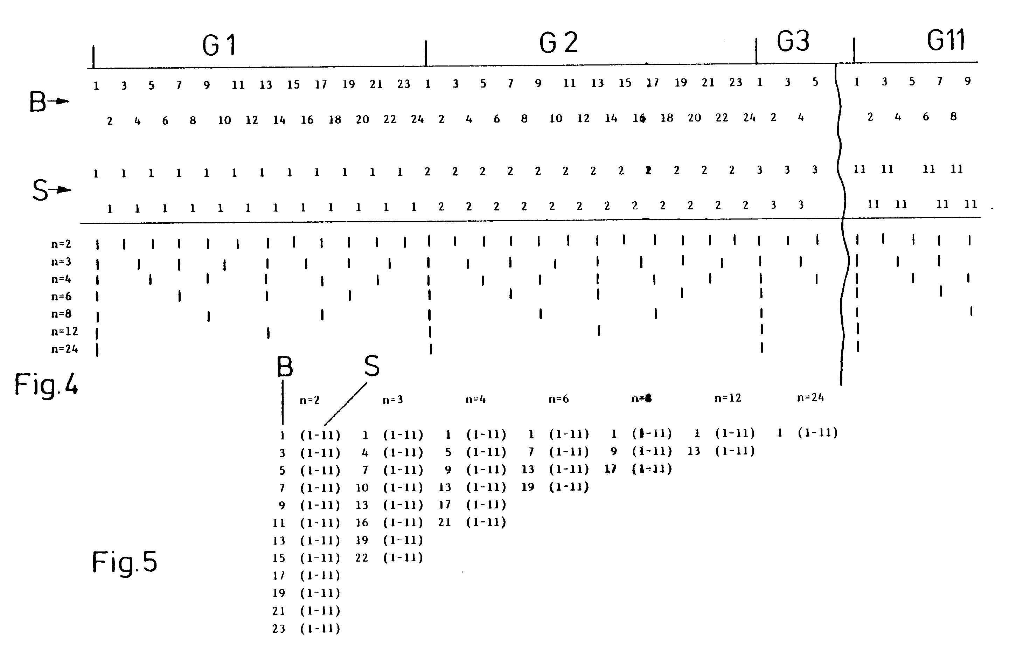

Fig. 4 zeigt die modifizierte Aufzeichnung. Innerhalb einer Gruppe G1 von 24 Spuren werden zunächst alle Segmente S1 von 24 aufeinanderfolgenden Bildern B1 - B24 aufgezeichnet. Innerhalb der nächsten Gruppe G2 werden dann alle Segmente S2 derselben aufeinanderfolgenden Bilder B1 bis B24 aufgezeichnet. Dies wiederholt sich bis zur Gruppe G11, in der alle Segmente S11 der aufeinanderfolgenden Bilder B1 bis B24 aufgezeichnet werden. Am Ende der Gruppe G11 sind alle Segmente S1 bis S11 aller Bilder B1 bis B24 in modifizierter Reihenfolge aufgezeichnet.

In den darunter gezeichneten Zeilen n = 2, n = 3, usw. zeigen die kurzen senkrechten Striche an, welche der Spuren, d.h. welche Segmente S abgetastet werden können und somit für die Bildwiedergabe zur Verfügung stehen. Es ist ersichtlich, daß jeweils die entsprechend dem Faktor n abtastbaren Bilder je mit allen ihren ursprünglichen Segmenten S1 - S11 abtastbar sind. Bei n = 2 können gemäß der Zeile n = 2 in Fig. 4 die Segmente B1S1, B3S1, B5S1, usw. abgetastet werden. Entsprechendes gilt für die Segmente S2, S3 ... bis S11 in den folgenden Gruppen G2, G3 ... bis G11. Im Gegensatz zu Fig. 3 können also die ausgewählten Bilder entsprechend Fig. 5 mit allen ihren Segmenten S1 bis S11 zurückgewonnen werden. Lediglich die Zahl der abtastbaren Bilder wird kleiner, was durch die erhöhte Längsgeschwindigkeit V unvermeidbar ist. Bei n = 24 kann nur noch das Bild B1 als einziges von 24 Bildern abgetastet werden, jedoch auch mit allen seinen ursprünglichen Segmenten S1 bis S11.

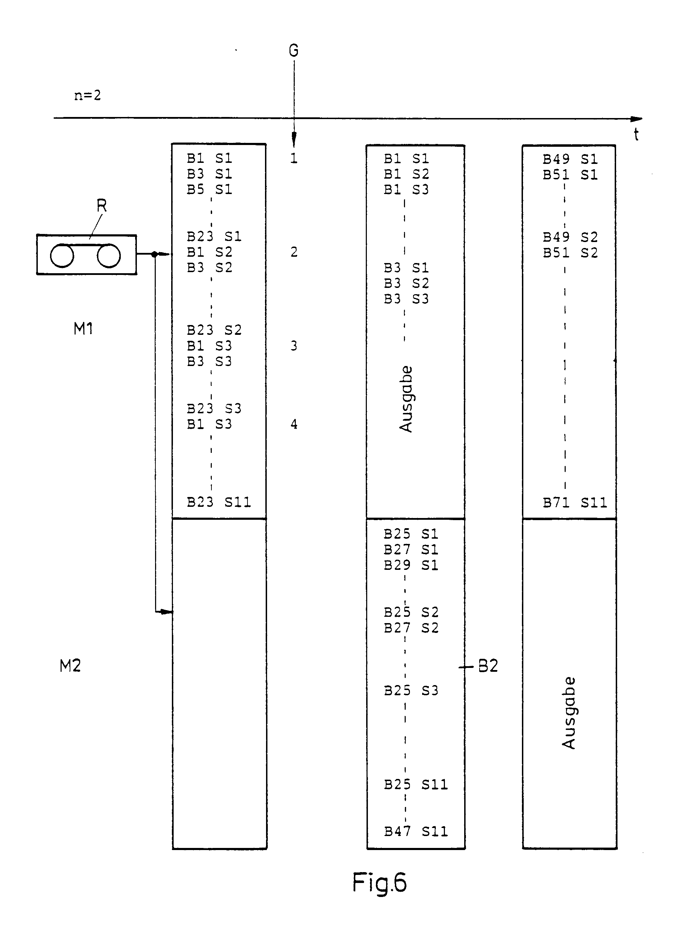

Fig. 6 zeigt die Organisation der Speicher bei einer um den Faktor 2 erhöhten Längsgeschwindigkeit V, also 2 x Vo und n = 2, für die Wiedergabe. Die einzelnen Segmente gelangen in der Reihenfolge, wie sie gemäß Fig. 4 abgetastet werden, von dem Recorder R in den Speicherbereich M1. Sie sind dann in dem Speicherbereich M1 in Gruppen G1 bis G11 gemäß Fig. 4 angeordnet. In der mittleren Spalte ist die Ausgabe der Segmente dargestellt. Die Ausgabe aus dem Speicherbereich M1 erfolgt jetzt so, daß die Bilder je mit ihren eigenen Segmenten S1 - S11 in der richtigen Reihenfolge verfügbar sind, also in der dargestellten Reihenfolge B1S1, B1S2 ...bis B1S11, dann B3S1, B3S2 ... bis B3S11. Da das letzte Segment Sll des ersten Bildes B1 erst gemäß Fig 4 am Ende der Speicherbereiche M1 gespeichert werden kann, kann das Auslesen zur Erzielung der richtigen Folge gemäß der mittleren Spalte oben in Fig. 6 erst am Ende des Einlesens in den Speicherbereich M1 beginnen.

Während der Speicherbereich M1 ausgelesen wird, werden die folgenden, vom Recorder R kommenden Segmente B25S1, B27S1 usw. in einen zweiten Speicherbereich M2 eingelesen. Diese Segmente von B25S1 bis B47S11 werden dann in dem Zeitraum gemäß der rechten Spalte wieder in der geordneten Reihenfolge ausgelesen. Während dieser Zeit werden die nun folgenden Segmente B49S1 bis B71S11 wieder in den nunmehr freien Speicherbereich M1 eingelesen usw.. Die beiden Speicherbereiche M1 und M2 dienen also wechselweise abwechselnd zum Einlesen der Segmente eines Blockes B1, B2, B3 und zum Auslesen der Segmente in der geänderten, für die Bildwiedergabe erforderlichen Reihenfolge.

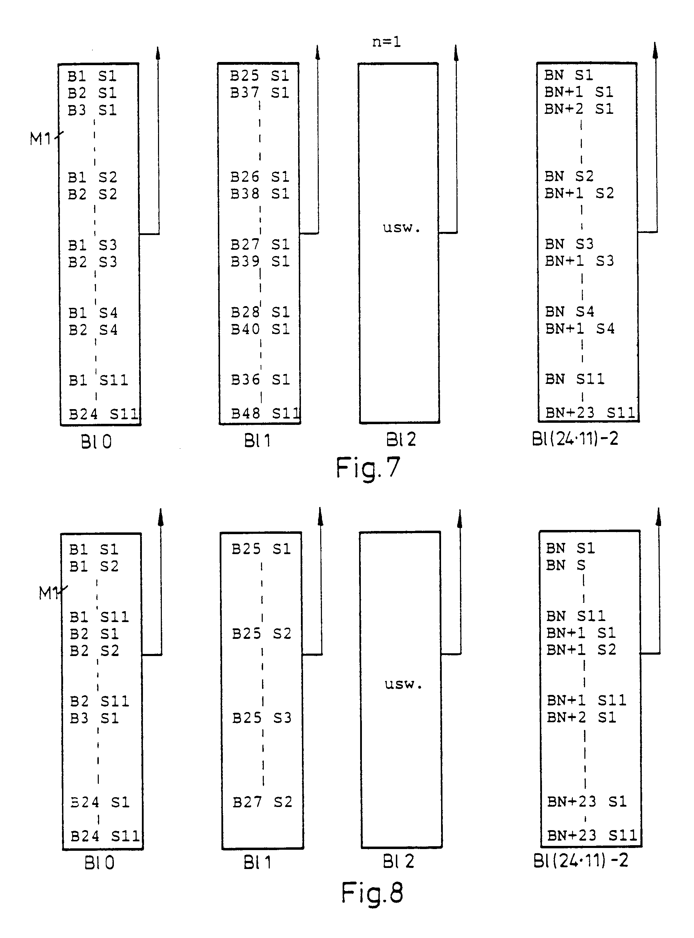

Fig. 7 zeigt die Anordnung der Speicher für den Normalbetrieb, also n = 1, für die Wiedergabe. In diesem Falle werden sämtliche Segmente gemäß Fig. 4 abgetastet und in die entsprechend bemessenen Speicherbereiche M in der Reihenfolge gemäß Fig. 4 eingelesen. Für die Bildwiedergabe werden jeweils die Segmente eines Blockes B1, d.h. eines Speicherbereiches M1, wieder in der für die Bildwiedergabe notwendigen Reihenfolge ausgelesen, d.h. der Reihenfolge gemäß Fig. 2. Die Speicher zur Ordnung der Segmente werden bei der Wiedergabe also auch bei Normalbetrieb benötigt. Während des Auslesens des Speicherbereiches M1 werden die folgenden Segmente beginnend bei B25S1 in den Speicherbereich M1 wieder eingelesen. Dabei kann jede frei werdende Speicherstelle für ein Segment wieder mit dem gerade vom Recorder R kommenden Segment eingelesen werden. Sobald B1S1 für die Wiedergabe aus der Speicherstelle des Speicherbereiches M1 ausgelesen ist, wird das Segment B25S1 in diese Speicherstelle eingelesen. Da anschließend aus dem Speicherbereich M1 das Segment B1S2 gemäß Fig. 6 oben ausgelesen wird, kann in diese Speicherstelle das nächste vom Recorder R kommende Segment B26S1 eingelesen werden. Entsprechend wird die Speicherstelle mit dem Segment B1S3 nach dem Auslesen dieses Segmentes mit dem vom Recorder R kommenden Segment B27S1 eingelesen. Dadurch ergibt sich also eine modifizierte Anordnung der Segmente in den Speicherstellen des Speichers M1. Diese Lösung hat den Vorteil, daß jede Speicherstelle für ein Segment nach dem Auslesen unmittelbar wieder mit einem neuen Segment eingelesen wird und keine Speicherstelle unnütz leer bleibt.

Fig. 8 zeigt die Speicher für die Aufnahme. Die Segmente werden zunächst in ihrer ursprünglichen Reihenfolge, also B1S1, B1S2, B1S3 usw. während des Blockes BL0 in den Speicherbereich M1 eingelesen. Der Auslesevorgang erfolgt so, daß eine Aufzeichnung der Segmente gemäß Fig. 4 erfolgt. Auch hier wird jeweils nach dem Auslesen eines Segmentes für die Aufnahme aus einer Speicherstelle das jeweils ankommende Segment des Signales in die Speicherstelle eingelesen. Nach dem Auslesen von B1S1 im Block BL0 nach dem Ende des Einlesens des gesamten Blockes BL0 wird das kommende Segment B25S1 in diese Speicherstelle eingelesen. Entsprechend wird nach dem nachfolgenden Auslesen des Signals B2S1 das folgende Signal B25S2 in diese Speicherstelle eingelesen. Dadurch wird wieder erreicht, daß je Speicherstelle nach dem Auslesen möglichst schnell wieder eingelesen wird und nicht unnütz lange leer bleibt.

## Patentansprüche

1. Videorecorder mit Schrägspur-Aufzeichnung, bei dem mehrere (z) Segmente (S) eines Bildes (B) in mehreren (z) Schrägspuren (3) aufgezeichnet werden, **dadurch gekennzeichnet,** daß die Segmente (S) des Zeitraums mehrerer aufeinanderfolgender Raster oder Bilder (B) in einer derart abgewandelten Reihenfolge aufgezeichnet werden, daß bei um einen Faktor n mit n größer gleich 2 (2, 4, ... 24) erhöhter Längsgeschwindigkeit (V) des Magnetbandes (1) die entsprechend dem Faktor n bei der Abtastung ausgewählten Raster oder Bilder (B) jeweils mit mehreren oder allen ihren Segmenten (S) abtastbar sind.

2. Recorder nach Anspruch 1, dadurch gekennzeichnet, daß innerhalb einer Gruppe (G1) von m (24) Spuren (S) alle ersten Segmente (S1) von m aufeinanderfolgenden Bildern (B), innerhalb der nächsten Gruppe (G2) alle zweiten Segmente (S2) der m Bilder (B) usw. aufgezeichnet werden.

3. Recorder nach Anspruch 2, dadurch gekennzeichnet, daß der Wert von m gleich dem Maximalwert des Wertes von n ist.

4. Recorder nach Anspruch 1, dadurch gekennzeichnet, daß die Reihenfolge in der Aufzeichnung der Segmente so abgewandelt ist, daß die ausgewählten Raster oder Bilder (B), die mit mehreren oder allen ihren Segmenten (S1 - S11) abtastbar sind, in der ursprünglichen Raster-oder Bildfolge äquidistant sind.

5. Recorder nach Anspruch 1, dadurch gekennzeichnet, daß bei der Aufnahme die den Spuren (3) bzw. Segmenten (S) zugeordneten Signale in Speicher (M) eingelesen und in der abgewandelten Reihenfolge aus den Speichern (M) ausgelesen werden.

6. Recorder nach Anspruch 1, dadurch gekennzeichnet, daß bei der Wiedergabe die vom Band (1) abgetasteten Signale der einzelnen Spuren (3) bzw. Segmente (S) in Speicher eingelesen und mit einer geänderten, für die richtige Bildwiedergabe notwendigen Reihenfolge aus den Speichern ausgelesen werden.

7. Recorder nach Anspruch 5 oder 6, dadurch gekennzeichnet, daß die Gesamt-Speicherdauer der Speicher (M) gleich dem Produkt aus dem gemeinsamen geradzahligen Vielfachen (n) der Längsgeschwindigkeiten (V) und der Bilddauer ist.

8. Recorder nach Anspruch 2, dadurch gekennzeichnet, daß die Signale von aufeinanderfolgenden Blöcken von z Gruppen (G) abwechselnd in einen ersten (M1) und einen zweiten Speicherbereich (M2) eingelesen werden und das Auslesen jeweils eines Speicherbereiches (M1, M2) am Ende des Einlesens dieses Speicherbereiches beginnt.

9. Recorder nach Anspruch 5 oder 6, dadurch gekennzeichnet, daß bei der Aufnahme und/oder Wiedergabe unmittelbar nach dem Auslesen eines Segmentes (S) aus einer Speicherstelle des Speichers (M1) das im Signal ankommende bzw. vom Recorder (R) abgetastete Segment (S) in diese Speicherstelle eingelesen wird.

## Claims

1. Video recorder with oblique track recording, in which a plurality (z) of segments (S) of a picture (B) are recorded in a plurality (z) of oblique tracks (3), characterised in that the segments (S) of the time period of several successive rasters or pictures (B) are recorded in a sequence which is modified in such a way that at a running speed (V) of the magnetic tape (1) increased by a factor n with n greater than or equal to 2 (2, 4, ... 24) the rasters or pictures (B) selected during scanning according to the factor n can each be scanned with some or all of their segments (S).

2. Recorder according to Claim 1, characterised in that within a group (G1) of m (24) tracks (S) all first segments (S1) of m successive pictures (B) are recorded, within the next group (G2) all second segments (S2) of the m pictures (B) are recorded, etc.

3. Recorder according to Claim 2, characterised in that the value of m is equal to the maximum value of n.

4. Recorder according to Claim 1, characterised in that the sequence in the recording of the segments is modified so that the selected rasters or pictures (B) which can be scanned with some or all of their segments (S1 - S11) are equidistant in the original raster or picture sequence.

5. Recorder according to Claim 1, characterised in that during the recording the signals associated with the tracks (3) or segments (S) are read into stores (M) and are read out of the stores (M) in the modified sequence.

6. Recorder according to Claim 1, characterised in that during playback the signals of the individual tracks (3) or segments (S) scanned from the tape (1) are read into stores and are read out of the stores with a changed sequence which is necessary for the correct playback of the picture.

7. Recorder according to Claim 5 or 6, characterised in that the total storage duration of the stores (M) is equal to the product of the common even-numbered multiple (n) of the running speeds (V) and the picture duration.

8. Recorder according to Claim 2, characterised in that the signals from successive blocks of z groups (G) are read alternately into a first storage area (M1) and a second storage area (M2) and read-out from each storage area (M1, M2) begins at the end of reading in to this storage area.

9. Recorder according to Claim 5 or 6, characterised in that during recording and/or playback immediately after read-out of a segment (S) from a storage location of the store (M1) the segment (S) arriving in the signal or scanned by the recorder (R) is read into this storage location.

## Revendications

1. Magnétoscope avec enregistrement hélicoïdal dans lequel plusieurs (z) segments (S) d'une image (B) sont enregistrés dans plusieurs (z) pistes obliques (3), **caractérisé en ce** que les segments (S) de la période de plusieurs trames ou images (B) successives sont enregistrés dans un ordre modifié à un tel point que, pour une vitesse longitudinale (V) de la bande magnétique (1) accrue d'un facteur n avec n supérieur ou égal à 2 (2, 4, ... 24) les trames ou images (B) sélectionnées conformément au facteur n lors du balayage peuvent être respectivement balayées avec plusieurs ou avec tous leurs segments (S).

2. Magnétoscope selon la revendication 1, **caractérisé en ce** qu'à l'intérieur d'un groupe (G1) de m (24) pistes (S) tous les premiers segments (S1) de m images successives (B) et qu'à l'intérieur du prochain groupe (G2) chaque deuxième segment (S2) des m images (B) etc. sont enregistrés.

3. Magnétoscope selon la revendication 2, **caractérisé en ce** que la valeur de m est égale à la valeur maximale de la valeur de n.

4. Magnétoscope selon la revendication 1, **caractérisé en ce** que l'ordre dans l'enregistrement des segments est modifié à tel point que les trames ou images sélectionnées (B), qui peuvent être balayées avec plusieurs ou avec tous leurs segments (S1 - S11), sont équidistantes dans la séquence de trames ou d'images d'origine.

5. Magnétoscope selon la revendication 1, **caractérisé en ce** que lors de l'enregistrement, les signaux qui sont affectés aux pistes (3) ou aux segments (S) sont mis en mémoire dans des mémoires (M) et qu'ils sont extraits des mémoires (M) dans l'ordre modifié.

6. Magnétoscope selon la revendication 1, **caractérisé en ce** qu'à la restitution les signaux des différentes pistes (3) ou des différents segments (S) balayés par la bande (1) sont mis en mémoire dans des mémoires et sont extraits des mémoires avec un ordre modifié qui est nécessaire à la restitution correcte de l'image.

7. Magnétoscope selon la revendication 5 ou 6, **caractérisé en ce** que la durée totale de mémoire des mémoires (M) est égale au produit du multiple pair commun (n) des vitesses longitudinales (V) et de la durée de l'image.

8. Magnétoscope selon la revendication 2, **caractérisé en ce** que les signaux de blocs successifs de z groupes (G) sont mis en mémoire alternativement dans une première zone de mémoire (M1) et dans une seconde zone de mémoire (M2) et que l'extraction respectivement d'une zone de mémoire (M1, M2) commence à la fin de la mise en mémoire dans cette zone de mémoire.

9. Magnétoscope selon la revendication 5 ou 6, **caractérisé en ce** qu'à l'enregistrement et/ou à la restitution le segment (S) qui arrive dans le signal ou qui est balayé par le magnétoscope (R) est mis en mémoire, immédiatement après l'extraction d'un segment (S) d'un emplacement de mémoire de la mémoire (M1), dans cet emplacement de mémoire.
